# EUROPÄISCHE PATENTSCHRIFT

(11) **EP 2 977 623 B1**
(45) Veröffentlichungstag und Bekanntmachung des Hinweises auf die Patenterteilung: **09.08.2017**
(21) Anmeldenummer: 15401069.8
(22) Anmeldetag: 09.07.2015
(51) Int. Cl.: F16B 13/00

(54) **ANKER**
ANCHOR
ANCRE

(30) Priorität: 23.07.2014 DE 102014110392; 28.07.2014 DE 102014110619
(43) Veröffentlichungstag der Anmeldung: 27.01.2016
(73) Patentinhaber: fischerwerke GmbH & Co. KG, 72178 Waldachtal (DE)
(72) Erfinder: Bäuerle, Ralf, 72226 Simmersfeld (DE); Wetzel, Bernd, 72250 Freudenstadt-Wittlensweiler (DE)

(56) Entgegenhaltungen:
- DE-A1-102006 000 224
- JP-A- H08 218 501

## Beschreibung

Die Erfindung betrifft einen Anker mit den Merkmalen des Oberbegriffs des Anspruchs 1.

Unter einem "Anker" soll ein typischerweise, jedoch nicht zwingend, stabförmiges Bauteil verstanden werden, das in einem Ankerloch in einem Ankergrund verankert, d.h. befestigt ist und zur Befestigung eines Gegenstands am Ankergrund dient. Der Ankergrund besteht oft aus Beton oder Mauerwerk und das Ankerloch ist üblicherweise gebohrt. Allerdings sind auch andere Herstellungen des Ankerlochs möglich. Die Verankerung kann durch Aufspreizen oder chemisch erfolgen, letzteres ist eine Befestigung eines Ankers mit einer aushärtenden bzw. ausgehärteten Masse, beispielsweise einem Ein- oder Mehrkomponentenharz, einem Mörtel oder einem Kunstharzmörtel. Die Aufzählung ist beispielhaft und nicht abschließend. Die Erfindung ist nicht auf Anker beschränkt, die durch Aufspreizen oder chemisch verankert werden bzw. sind.

Bei einer Verankerung in einem flüssigkeitsdichten Ankergrund bzw. einem Ankergrund, der eine flüssigkeitsdichte Oberfläche aufweist, muss nach einem Bohren das Ankerloch abgedichtet werden. Eine flüssigkeitsdichte Oberfläche kann beispielsweise durch einen flüssigkeitsdichten Anstrich oder eine sonstige flüssigkeitsdichte Schicht oder eine flüssigkeitsdichte Folie oder ein Edelstahlblech erreicht werden. Die Aufzählung ist beispielhaft und nicht abschließend. Flüssigkeitsdichte Ankergründe oder Oberflächen auf Ankergründen gibt es beispielsweise in betonierten Wasserbehältern, Schwimmbädern, Maschinenhallen oder Werkstätten, in letzteren zur Verhinderung des Eindringens von Kraftstoffen, Ölen und sonstigen flüssigen Chemikalien durch einen Boden oder eine Wand in das Erdreich. Anker werden in solchen Ankergründen gesetzt zur Befestigung beispielsweise von Handgriffen, Fußtritten, Aggregaten, Maschinen, Hebebühnen. Auch im Hoch- und im Tiefbau werden Abdichtungen von Ankerlöchern benötigt.

Die Offenlegungsschrift DE 10 2006 000 224 A1 offenbart einen Anker mit einem lochscheibenförmigen Dichtelement, dessen Mittelloch der Anker durchdringt, wenn er wie vorgesehen verankert und das Dichtelement wie vorgesehen angeordnet ist. Als Anker verwendet die Offenlegungsschrift eine Gewindestange, die chemisch in einem Ankerloch befestigt wird. Das Dichtelement weist in einer Ausführungsform einen sein Mittelloch umgebenden Stauchkragen auf, der auf einer dem Ankergrund abgewandten Seite absteht und an dem eine Mutter drehbar festgelegt ist, mit der das Dichtelement durch Schrauben auf einem Außengewinde des Ankers gegen den Ankergrund bzw. gegen eine flüssigkeitsdichte Oberfläche des Ankergrunds gedrückt werden kann. Der Stauchbund ist verformbar, wodurch eine Schwenkbarkeit des Dichtelements auf der Ankerstange gegeben ist, so dass sich das Dichtelement auch dann an den Ankergrund anlegt, wenn die Ankerstange nicht rechtwinklig zur Oberfläche des Ankergrunds im Ankergrund verankert ist.

In einer Anlagefläche des Dichtelements, die dem Ankergrund zugewandt ist, wenn das Dichtelement in vorgesehener Weise angeordnet ist, weist das bekannte Dichtelement eine umlaufende, in Ansicht herzförmige Rille auf, die das Mittelloch des lochscheibenförmigen Dichtelements umschließt. Durch eine Einfüllöffnung, die von einer Außenseite des Dichtelements in die Rille mündet, lässt sich eine abbindende Dichtmasse in die Rille einfüllen, wenn das Dichtelement am Ankergrund anliegt, um das Dichtelement am Ankergrund abzudichten.

Das bekannte Dichtelement hat den Nachteil, dass es nur mittels einer zusätzlichen Mutter gegen den Ankergrund gepresst werden kann, um ein Ausdringen von Dichtmasse am äußeren Rand zu verhindern. Die Mutter muss in der Regel nach dem Aushärten der Dichtmasse wieder gelöst werden und erst dann kann der Befestigungsgegenstand aufgesetzt werden.

Aufgabe der Erfindung ist, einen alternativen Anker mit einem Dichtelement zur Abdichtung eines Ankerlochs in einem Ankergrund vorzuschlagen, wobei das Dichtelement gegenüber dem Anker schwenkbar ist zur Anpassung an einen Anker, der nicht rechtwinklig zu einer Oberfläche eines Ankergrunds in dem Ankergrund verankert ist. Insbesondere soll der Anker mit Dichtelement eine einfachere und schnellere Installation erlauben.

Diese Aufgabe wird erfindungsgemäß durch die Merkmale des Anspruchs 1 gelöst. Der erfindungsgemäße Anker weist ein Außengewinde auf, das durchgehend oder nur auf einem Abschnitt vorhanden ist. Des Weiteren weist der erfindungsgemäße Anker ein Dichtelement mit einer Anlagefläche, die zur Anlage an einer Oberfläche des Ankergrunds vorgesehen ist, und mit einem Durchgangsloch für den Anker auf, wobei das Dichtelement auf dem Anker schwenkbar ist, wenn der Anker das Durchgangsloch des Dichtelements durchdringt, beispielsweise das Dichtelement mit seinem Durchgangsloch auf den Anker aufgesetzt oder - was als gleichbedeutend angesehen wird - der Anker in das Durchgangsloch des Dichtelements verbracht ist. "Schwenkbar" meint hier, dass eine Winkeländerung gegenüber der Längsachse des Ankers stattfinden kann. Erfindungsgemäß weist das Durchgangsloch des Dichtelements ein Innengewinde auf, das mit Spiel zum Außengewinde des Ankers passt. Stehen das Außengewinde des Ankers und das Innengewinde des Dichtelements in Eingriff, ist das Dichtelement axial auf dem Anker festgelegt, wobei sich das Dichtelement durch Schrauben axial auf dem Anker bewegen lässt. Mit "Schrauben" ist eine Drehung des Dichtelements auf dem Anker und/oder eine Drehung des Ankers im Dichtelement gemeint, wobei das mit dem Außengewinde des Ankers in Eingriff stehende Innengewinde des Dichtelements die Axialbewegung des Dichtelements in Bezug auf den Anker bewirkt. Durch das erfindungsgemäße Spiel des Innengewindes des Dichtelements auf dem Außengewinde des Ankers ist die gewollte Schwenkbarkeit des Dichtelements in Bezug auf den Anker gegeben, durch die ein Anker, der nicht rechtwinklig zu einer Oberfläche eines Ankergrunds in dem Ankergrund verankert ist, ausgeglichen wird. Das bedeutet, dass das Dichtelement auch dann an der Oberfläche des Ankergrunds anliegt, wenn der Anker nicht rechtwinklig zur Oberfläche des Ankergrunds im Ankergrund verankert ist. Ausführungen der Erfindung sehen eine Schwenkbarkeit des Dichtelements in Bezug auf den Anker von etwa 3°, 5°, 7° oder 10° zu einer Radialen zum Anker in allen Richtungen vor.

Das Außengewinde des Ankers kann zugleich auch ein Befestigungsgewinde sein, das nicht nur zur schwenkbaren Befestigung des Dichtelements, sondern auch eines anderen, am Ankergrund zu befestigenden Gegenstands dient. Jedenfalls wenn das Außengewinde des Ankers zugleich auch ein Befestigungsgewinde zur Befestigung eines Gegenstands am Ankergrund ist, ist das Außengewinde vorzugsweise ein genormtes Gewinde und das Innengewinde des Dichtelements weist ein Übermaß zur Erzielung der gewünschten Schwenkbarkeit des Dichtelements in Bezug auf den Anker auf.

Durch die Gewindeverbindung zwischen Anker und Dichtelement kann das Dichtelement ohne weitere Bauteile, wie eine Mutter, gegen den Ankergrund gepresst werden. Dies ermöglicht, dass noch vor dem Aushärten der Dichtmasse der Befestigungsgegenstand über den Anker gestülpt und festgezogen wird. Eine Installation wird hierdurch erleichtert und kann schneller erfolgen.

Eine Ausgestaltung der Erfindung sieht ein axial kurzes Innengewinde und/oder ein axial kurzes Durchgangsloch des Dichtelements vor. Beides dient der Schwenkbarkeit des Dichtelements in Bezug auf den Anker, wenn der Anker das Durchgangsloch des Dichtelements durchdringt. "Axial kurz" ist in Bezug auf einen Durchmesser des Ankers, seines Außengewindes, des Innengewindes des Dichtelements oder des Durchgangslochs des Dichtelements zu verstehen. Insbesondere weist das Innengewinde eine axiale Länge von maximal der Hälfte, insbesondere maximal einem Drittel seines Durchmessers und/oder das Durchgangsloch eine axiale Länge von maximal 0,6, insbesondere maximal 0,4 seines Durchmessers auf. Die axiale Länge des Durchgangslochs kann einer Dicke des Dichtelements entsprechen.

Eine Ausgestaltung der Erfindung weist eine sich aufweitende Mündung des Durchgangslochs des Dichtelements insbesondere am Übergang zur Anlagefläche des Dichtelements auf. Die Aufweitung kann eine Ringstufe, eine Fase oder eine konvexe oder konkave Rundung sein. Die Aufzählung ist nicht abschließend, sondern beispielhaft. Die Aufweitung an der Mündung des Durchgangslochs des Dichtelements bewirkt einen ringförmigen, den Anker umschließenden Freiraum, der der Schwenkbarkeit des Dichtelements in Bezug auf den Anker dient und/oder der sich mit einer abbindenden und vorzugsweise dauerhaft elastischen Dichtmasse zur Abdichtung zwischen dem Anker und dem Dichtelement verfüllen lässt.

Vorzugsweise ist das Dichtelement eine Lochscheibe.

In bevorzugter Ausgestaltung der Erfindung weist das Dichtelement in seiner Anlagefläche eine das Durchgangsloch umschließende erste Vertiefung auf. Die erste Vertiefung kann unmittelbar am Durchgangsloch angeordnet sein, beispielsweise kann die Aufweitung der Mündung des Durchgangslochs auf der Seite der Anlagefläche die das Durchgangsloch unmittelbar umschließende erste Vertiefung bilden. Zusätzlich oder ausschließlich kann das Dichtelement eine zweite das Durchgangsloch mit Abstand umschließende Vertiefung in der Anlagefläche aufweisen. Da die erste und zweite Vertiefung alternativ sein können, ist es erfindungsgemäß möglich, dass es nur eine "zweite" Vertiefung gibt, genauso wie es erfindungsgemäß möglich ist, dass es nur eine "erste" Vertiefung gibt. Diese zweite Vertiefung ist beispielsweise rillenförmig. Die Vertiefung/en sind zum Verfüllen mit einer abbindenden, vorzugsweise dauerelastischen Dichtmasse vorgesehen, wobei eine das Durchgangsloch unmittelbar umschließende erste Vertiefung insbesondere zur Abdichtung zwischen dem Dichtelement und dem Anker, allerdings eventuell auch zur Abdichtung zwischen dem Anker und dem Ankergrund und/oder zwischen dem Dichtelement und dem Ankergrund dient. Eine das Durchgangsloch des Dichtelements mit Abstand umschließende zweite Vertiefung dient der Abdichtung zwischen dem Dichtelement und dem Ankergrund durch das beschriebene Verfüllen mit einer abbindenden, vorzugsweise dauerelastischen Dichtmasse. Eine das Durchgangsloch mit Abstand umschließende zweite Vertiefung bewirkt eine Abdichtung zwischen dem Dichtelement und dem Ankergrund durch Verfüllung mit einer abbindenden Dichtmasse auch dann, wenn ein Ankerloch im Ankergrund einen Ausbruchkrater an seiner Mündung aufweist, sofern ein Abstand der das Durchgangsloch umschließenden zweiten Vertiefung in der Anlagefläche des Dichtelements so groß ist, dass die zweite Vertiefung auch den Ausbruchkrater des Ankerlochs im Ankergrund umschließt.

Zum Verfüllen mit einer abbindenden Dichtmasse sieht eine Ausgestaltung der Erfindung mindestens eine Öffnung vor, die von einer Außenseite des Dichtelements durchgeht und in die erste oder zweite Vertiefung in der Anlagefläche des Dichtelements mündet. Durch die Öffnung lässt sich die Dichtmasse in die erste oder zweite Vertiefung einbringen, die zwischen dem Dichtelement und dem Ankergrund und/oder zwischen dem Dichtelement und dem Anker abdichtet. Eine weitere, beispielsweise gegenüberliegende Öffnung oder auch mehrere weitere Öffnungen, die gleich- oder ungleichmäßig über eine Länge der Vertiefung verteilt angeordnet sind, ermöglichen bei einer Weiterbildung der Erfindung eine Kontrolle der Verfüllung der Vertiefung durch Austritt der Dichtmasse.

Vorzugsweise ist eine weitere Öffnung durch eine das Innengewinde des Durchgangslochs axial durchsetzende Nut gebildet.

Eine bevorzugte Ausgestaltung der Erfindung sieht eine das Durchgangsloch des Dichtelements unmittelbar umschließende erste Vertiefung und eine das Durchgangsloch des Dichtelements mit Abstand umschließende zweite Vertiefung jeweils in der Anlagefläche des Dichtelements und eine Verbindung der beiden Vertiefungen vor. Die Verbindung kann beispielsweise ein Loch oder eine beispielsweise ebenfalls rillenförmige weitere Vertiefung sein. Durch die Verbindung fließt eingebrachte Dichtmasse von der einen in die andere Vertiefung oder in beide Vertiefungen, so dass durch eine Öffnung sowohl die das Durchgangsloch des Dichtelements mit Abstand umschließende zweite Vertiefung als auch die das Durchgangsloch unmittelbar umschließende erste Vertiefung mit Dichtmasse verfüllt werden können.

Um das Dichtelement zum Schrauben auf dem Anker einfach drehen zu können, sieht eine Ausgestaltung der Erfindung einen Werkzeugsitz zu einem durch Formschluss drehfesten Ansetzen eines Drehwerkzeugs vor. Ein solcher Werkzeugsitz können zwei Parallelflächen oder ein Vier- oder Sechskant zum Ansetzen beispielsweise eines Gabelschlüssels als Drehwerkzeug sein. Zwei Parallelflächen können beispielsweise beiderseits des Durchgangslochs des Dichtelements, ein Vier- oder Sechskant das Durchgangsloch des Dichtelements umgebend angeordnet sein. Als Werkzeugsitz ist beispielsweise ein Innenvier-, -sechs-, oder allgemein Mehrkant oder ein Innenstern (TORX) in einer von der Außenseite in die Vertiefung in der Anlagefläche des Dichtelements durchgehende Öffnung zum Einbringen oder für den Austritt der Dichtmasse ausgebildet. Die genannten oder ein anderer Werkzeugsitz können auch an anderer Stelle des Dichtelements vorgesehen sein. Die Aufzählung ist nicht abschließend, sondern beispielhaft.

Eine Ausgestaltung der Erfindung sieht eine Dichtung an der Anlagefläche des Dichtelements vor, die die Vertiefung/en des Dichtelements umschließt. Insbesondere ist die Dichtung außerhalb einer äußersten zweiten Vertiefung des Dichtelements vorgesehen. Die Dichtung liegt an der Oberfläche des Ankergrunds an, wenn das Dichtelement gegen die Oberfläche des Ankergrunds gedrückt wird, und vermeidet einen Austritt von Dichtmasse zwischen dem Dichtelement und dem Ankergrund an einem Außenrand des Dichtelements, damit sich die Dichtmasse im Bereich des Dichtelements zwischen dem Dichtelement und dem Ankergrund verteilt. Die Dichtung kann beispielsweise ein O-, Dreikant-, Vierkant-, oder Quadring sein oder eine Dichtlippe aufweisen. Die Dichtung besteht vorzugsweise aus einem weichen Material, das sich an eine raue und/oder unebene Oberfläche eines Ankergrunds anpasst.

Vorzugsweise ist das Dichtelement radial außerhalb der Dichtung derart gestaltet, dass es bei einer ebenen Oberfläche eines Ankergrunds radial außerhalb der Dichtung nicht zur Anlage kommt, um eine mögliche Beschädigung der Oberfläche zu vermeiden. Insbesondere ist dieser Bereich axial zurückgesetzt.

Die Erfindung wird nachfolgend anhand eines in der Zeichnung dargestellten Ausführungsbeispiels näher erläutert. Es zeigen:
- Figur 1: einen Achsschnitt eines Ankers gemäß der Erfindung; und
- Figur 2: eine Ansicht einer Anlagefläche eines Dichtelements des Ankers aus Figur 1.

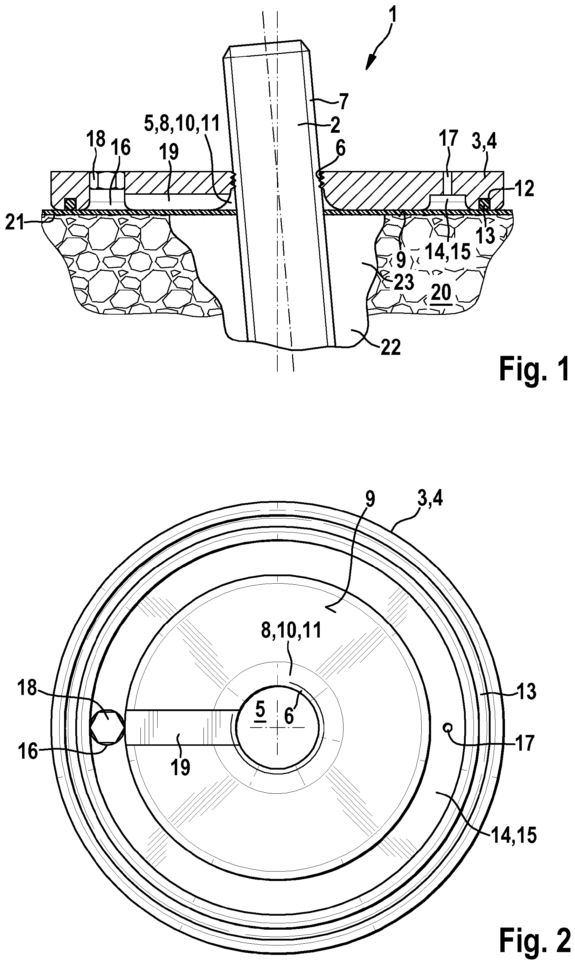

Der in Figur 1 dargestellte, erfindungsgemäße Anker 1 weist eine Gewindestange 2, die den eigentlichen Anker bildet, und eine Lochscheibe 3, die allgemein auch als Dichtelement 4 aufgefasst werden kann, auf. Anstelle der Gewindestange 2 sind andere Ankerstangen oder allgemein Anker, die chemisch verankerbar sind, oder auch anders, beispielsweise mechanisch durch Aufspreizen verankerbare Anker 1 möglich (nicht dargestellt). "Chemisch verankerbar" bedeutet, dass ein Anker mit einer aushärtenden Masse, beispielsweise einem Ein- oder Mehrkomponenten-Mörtel oder -Kunstharzmörtel verankerbar ist. Die das Dichtelement 4 bildende Lochscheibe 3 weist ein Durchgangsloch 5 mit einem Innengewinde 6 in ihrer Mitte auf, das von der den eigentlichen Anker bildenden Gewindestange 2 durchgriffen wird, wobei ein Außengewinde 7 der Gewindestange 2 mit dem Innengewinde 6 im Durchgangsloch 5 der Lochscheibe 3 in Eingriff steht. Durch den Eingriff der Gewinde 6, 7 ist die Lochscheibe 3 axial auf der Gewindestange 2 festgelegt, wobei sich die Lochscheibe 3 durch Schrauben axial in Bezug zur Gewindestange 2 bewegen lässt. "Schrauben" bedeutet eine Drehung der Lochscheibe 3 in Bezug auf die Gewindestange 2. Das Außengewinde 7 der Gewindestange 2 ist ein genormtes Gewinde, das über die Länge der Gewindestange 2 durchgeht. Grundsätzlich genügt ein Außengewinde 7 des Ankers 1 im Bereich der Lochscheibe 3. Das Innengewinde 6 im Durchgangsloch 5 der Lochscheibe 3 ist kein genormtes Gewinde, sondern weist ein Übermaß und damit Spiel auf dem Außengewinde 7 der Gewindestange 2 auf, so dass die Lochscheibe 3 in Bezug auf die Gewindestange 2 schwenkbar ist. Im Ausführungsbeispiel ist die Lochscheibe 3 in Bezug auf eine gedachte Radialebene der Gewindestange 2 um etwa 5° in alle Richtungen schwenkbar.

Um den beschriebenen und gewünschten Schwenkwinkel der Lochscheibe 3 in Bezug auf die Gewindestange 2 zu erreichen, weist nicht nur das Innengewinde 6 Spiel auf dem Außengewinde 7 auf, sondern es sind auch das Innengewinde 6 und das Durchgangsloch 5 der Lochscheibe 3 axial kurz in Bezug auf ihre Durchmesser. Das Innengewinde 6 hat etwa die 0,2-fache axiale Länge seines Durchmessers und das Durchgangsloch 5, das axial so lang wie die Lochscheibe 3 dick ist, hat etwa die 0,4-fache axiale Länge seines Durchmessers. Um den Schwenkwinkel der Lochscheibe 3 in Bezug auf die Gewindestange 2 nicht zu stark einzuschränken, weist das Durchgangsloch 5 zusätzlich eine sich aufweitende Mündung 8 auf der Seite einer Anlagefläche 9 der das Dichtelement 4 bildenden Lochscheibe 3 auf. Als Anlagefläche 9 wird die in Figur 2 zu sehende Fläche der Lochscheibe 3 bezeichnet, die einem Ankergrund zugewandt ist, wenn die Lochscheibe 3 in vorgesehener Weise angeordnet ist. Die sich aufweitende Mündung 8 des Durchgangslochs 5 schafft einen ringförmigen Freiraum 10, der die Gewindestange 2 unmittelbar umschließt. Der Freiraum 10 kann auch als das Durchgangsloch 5 und die Gewindestange 2 unmittelbar umschließende erste Vertiefung 11 in der Anlagefläche 9 der Lochscheibe 3 aufgefasst werden.

Nahe eines Außenrandes weist die das Dichtelement 4 des Ankers 1 bildende Lochscheibe 3 eine umlaufende Nut 12 in der Anlagefläche 9 auf, in die ein Dichtring 13 als Dichtung, im Ausführungsbeispiel ein O-Ring, eingelegt ist. Innerhalb des Dichtrings 13 weist die Lochscheibe 3 in der Anlagefläche 9 eine das Durchgangsloch 5 mit Abstand umschließende zweite Vertiefung 14 auf. Außerhalb des Dichtrings 13 ist die Lochscheibe etwas schmaler (nicht dargestellt), so dass sie in diesem Bereich nicht zur Anlage an die flüssigkeitsdichte Schicht 21 (siehe unten) kommen kann. Im Ausführungsbeispiel ist die zweite Vertiefung 14 eine kreisförmige, konzentrische Rille 15 in der Anlagefläche 9. In die zweite Vertiefung 14 münden zwei einander gegenüber angeordnete Durchgangslöcher, die eine Einfüllöffnung 16 und eine Entlüftungs- und Kontrollöffnung 17 bilden. Die Einfüllöffnung 16 weist einen Innensechskant als Werkzeugsitz 18 zu einem durch Formschluss drehfesten Ansetzen eines nicht dargestellten Drehwerkzeugs zu einem Drehantrieb der Lochscheibe 3 auf. Im Fall eines Innensechskants als Werkzeugsitz 18 ist das Drehwerkzeug ein Inbusschlüssel. Die erste Vertiefung 11 und die zweite Vertiefung 14 weisen eine Verbindung 19 auf, die im Ausführungsbeispiel eine radiale Rille in der Anlagefläche 9 der Lochscheibe 3 ist, die im Ausführungsbeispiel von der Einfüllöffnung 16 ausgeht.

Der erfindungsgemäße Anker 1 ist zur Verankerung in einem Ankergrund 20 beispielsweise aus Beton vorgesehen, der eine flüssigkeitsdichte Schicht 21 an seiner Oberfläche aufweist. Die flüssigkeitsdichte Schicht 21 kann beispielsweise ein Anstrich, eine Harzschicht, Bitumen, eine Kunststofffolie oder Edelstahlblech sein. Zur Verankerung wird ein Ankerloch 22 durch die flüssigkeitsdichte Schicht 21 in den Ankergrund 20 gebohrt und die den eigentlichen Anker 1 bildende Gewindestange 2 in das Ankerloch 22 eingebracht, so dass sie durch die durchbohrte flüssigkeitsdichte Schicht 21 aus dem Ankergrund 20 vorsteht. Mit beispielsweise einem Mörtel, beispielsweise auch einem Ein- oder Mehrkomponenten-Kunstharzmörtel, der auch vor der Gewindestange 2 in das Ankerloch 22 eingebracht sein kann, wird die Gewindestange 2 im Ankergrund 20 verankert. Anstatt der Gewindestange 2 zu der chemischen Verankerung mittels Mörtel kann der Anker 1 beispielsweise auch einen Spreizanker aufweisen, der durch Aufspreizen mechanisch im Ankerloch 22 im Ankergrund 20 verankerbar ist (nicht dargestellt).

Die das Dichtelement 4 des Ankers 1 bildende Lochscheibe 3 ist oder wird auf das Außengewinde 7 der Gewindestange 2 geschraubt und nach einem (ausreichenden) Aushärten des Mörtels durch Drehen bzw. Schrauben gegen die flüssigkeitsdichte Schicht 21 gedrückt. Zu einem Drehantrieb kann ein nicht dargestelltes Drehwerkzeug, insbesondere ein Inbusschlüssel, an dem den Werkzeugsitz 18 bildenden Innensechskant der Lochscheibe 3 angesetzt werden. Weil die Lochscheibe 3 wie weiter oben beschrieben auf der Gewindestange 2 schwenkbar ist, richtet sie sich an der Oberfläche des Ankergrunds 20 aus, so dass die das Dichtelement 4 bildende Lochscheibe 3 auch dann vollflächig mit ihrer gesamten Anlagefläche 9 an der flüssigkeitsdichten Schicht 21 anliegt, wenn die den eigentlichen Anker 1 bildende Gewindestange 2, wie in Figur 1 zu sehen, nicht rechtwinklig, sondern schräg zur Oberfläche des Ankergrunds 20 im Ankergrund 20 verankert ist. Voraussetzung ist, dass der Schwenkwinkel der Lochscheibe 3 mindestens so groß wie die Schrägstellung der Gewindestange 2 ist.

Durch das Schrauben und das Drücken der Lochscheibe 3 gegen die flüssigkeitsdichte Schicht 21 liegt der Dichtring 13 an der flüssigkeitsdichten Schicht 21 an. Anschließend wird eine dauerelastisch abbindende Dichtmasse durch die Einfüllöffnung 16 eingefüllt. Die nicht dargestellte Dichtmasse verteilt sich in der kreisförmigen zweiten Vertiefung 14 in der Anlagefläche 9 der Lochscheibe 3, die das Durchgangsloch 5 mit Abstand umschließt, und die Dichtmasse strömt durch die Verbindung 19 in die sich trompetentrichterförmig aufweitende Mündung 8 des Durchgangslochs 5, die eine die Gewindestange 2 und das Durchgangsloch 5 unmittelbar umschließende erste Vertiefung 11 bildet. Sobald Dichtmasse aus der Entlüftungs- und Kontrollöffnung 17 auf der gegenüberliegenden Seite der Einfüllöffnung 16 austritt, sind die Vertiefungen 11, 14 vollständig mit Dichtmasse verfüllt. In der zweiten Vertiefung 14, die das Durchgangsloch 5 mit Abstand umschließt, dichtet die nicht gezeichnete dauerelastische Dichtmasse zwischen der Oberfläche des Ankergrunds 20 bzw. der flüssigkeitsdichten Schicht 21 auf der Oberfläche des Ankergrunds 20 und der das Dichtelement 4 bildenden Lochscheibe 3 ab. Die zweite Vertiefung 14 befindet sich aufgrund ihres Abstands vom Durchgangsloch 5 außerhalb eines etwaigen Ausbruchskraters 23 des Ankerlochs 22, so dass die Dichtmasse auch dann zwischen der Lochscheibe 3 und dem Ankergrund 20 bzw. der flüssigkeitsdichten Schicht 21 abdichtet, wenn beim Bohren des Ankerlochs 22 ein Ausbruchkrater 23 entsteht. In der das Durchgangsloch 5 und die Gewindestange 2 unmittelbar umschließenden Vertiefung 11 dichtet die nicht dargestellte Dichtmasse zwischen der Lochscheibe 3 und der Gewindestange 2 ab. Der Dichtring 13 verhindert einen Austritt der Dichtmasse zwischen der Lochscheibe 3 und der flüssigkeitsdichten Schicht 21 am Außenrand der Lochscheibe 3 jedenfalls so lange, bis die Vertiefungen 11, 14 vollständig verfüllt sind. Nach dem Abbinden der dauerelastischen Dichtmasse dichtet der Anker 1 das Ankerloch 22 an der Durchdringungsstelle des Ankers 1 durch die flüssigkeitsdichte Schicht 21 ab.

Am Außengewinde 7 der aus dem Ankergrund 20 vorstehenden Gewindestange 2 kann ein nicht dargestellter Gegenstand befestigt werden. Das Außengewinde 7, an dem die Lochscheibe 3 mit ihrem Innengewinde 6 axial festgelegt ist, bildet somit zugleich ein Befestigungsgewinde zur Befestigung eines nicht dargestellten Gegenstands am Ankergrund 20.

### Bezugszeichenliste

### Anker

- 1: Anker
- 2: Gewindestange
- 3: Lochscheibe
- 4: Dichtelement
- 5: Durchgangsloch
- 6: Innengewinde
- 7: Außengewinde
- 8: Mündung
- 9: Anlagefläche
- 10: Freiraum
- 11: erste Vertiefung
- 12: Nut
- 13: Dichtring
- 14: zweite Vertiefung
- 15: Rille
- 16: Einfüllöffnung
- 17: Entlüftungs- und Kontrollöffnung
- 18: Werkzeugsitz
- 19: Verbindung
- 20: Ankergrund
- 21: flüssigkeitsdichte Schicht
- 22: Ankerloch
- 23: Ausbruchkrater

## Patentansprüche

1. Anker mit einem Dichtelement (4) und einem eigentlichen Anker, insbesondere einer Gewindestange (2), zur Verankerung in einem Ankerloch (22) in einem Ankergrund (20), wobei der eigentliche Anker ein Außengewinde (7) aufweist, das eine Anlagefläche (9), die zur Anlage an einer Oberfläche des Ankergrunds (20) vorgesehen ist, und ein Durchgangsloch (5) für den eigentlichen Anker aufweist, wobei das Dichtelement (4) auf dem eigentlichen Anker schwenkbar ist, wenn der eigentliche Anker das Durchgangsloch (5) im Dichtelement (4) durchdringt, **dadurch gekennzeichnet, dass** das Durchgangsloch (5) des Dichtelements (4) ein zum Außengewinde (7) des eigentlichen Ankers mit Spiel passendes Innengewinde (6) aufweist, das zu einer axialen Festlegung des Dichtelements (4) auf dem eigentlichen Anker auf das Außengewinde (7) des eigentlichen Ankers schraubbar ist und das Spiel auf dem Außengewinde (7) des eigentlichen Ankers aufweist, so dass das Dichtelement (4) auf dem eigentlichen Anker schwenkbar ist.

2. Anker nach Anspruch 1, **dadurch gekennzeichnet, dass** das Innengewinde (6) und/oder das Durchgangsloch (5) im Dichtelement (4) axial kurz ist.

3. Anker nach Anspruch 1 oder 2, **dadurch gekennzeichnet, dass** das Durchgangsloch (5) des Dichtelements (4) eine sich aufweitende Mündung (8) aufweist.

4. Anker nach einem der Ansprüche 1-3, **dadurch gekennzeichnet, dass** das Dichtelement (4) eine Lochscheibe (3) ist.

5. Anker nach einem der Ansprüche 1-4, **dadurch gekennzeichnet, dass** das Dichtelement (4) eine das Durchgangsloch (5) mit Abstand und/oder unmittelbar umschließende Vertiefung (11, 14) in seiner Anlagefläche (9) aufweist.

6. Anker nach Anspruch 5, **dadurch gekennzeichnet, dass** das Dichtelement (4) mindestens eine von einer Außenseite zur Anlagefläche (9) durchgehende Öffnung (16, 17) mit Abstand vom Durchgangsloch (5) aufweist.

7. Anker nach Anspruch 5, **dadurch gekennzeichnet, dass** das Dichtelement (4) eine das Durchgangsloch (5) unmittelbar umschließende erste Vertiefung (11) in seiner Anlagefläche (9) und eine das Durchgangsloch (5) mit Abstand umschließende zweite Vertiefung (14) in seiner Anlagefläche (9) und eine Verbindung (19) der beiden Vertiefungen (11, 14) aufweist.

8. Anker nach einem der vorhergehenden Ansprüche, **dadurch gekennzeichnet, dass** das Dichtelement (4) einen Werkzeugsitz (18) zu einem durch Formschluss drehfesten Ansetzen eines Drehwerkzeugs aufweist.

9. Anker nach einem der Ansprüche 6-8, **dadurch gekennzeichnet, dass** die mindestens eine Öffnung (16, 17) den Werkzeugsitz (18) aufweist.

10. Anker nach Anspruch 5, **dadurch gekennzeichnet, dass** das Dichtelement (4) eine das Durchgangsloch (5) mit Abstand umschließende zweite Vertiefung (14) in seiner Anlagefläche (9) und eine die zweite Vertiefung (14) umschließende Dichtung (13) an seiner Anlagefläche (9) aufweist.

## Claims

1. Anchor having a sealing element (4) and an actual anchor, especially a threaded rod (2), for anchoring in an anchor hole (22) in an anchor base (20), the actual anchor having an external thread (7), which has a contact face (9), which is intended to bear against a surface of the anchor base (20), and a through-hole (5) for the actual anchor, the sealing element (4) being pivotable on the actual anchor when the actual anchor passes through the through-hole (5) in the sealing element (4), **characterised in that** the through-hole (5) of the sealing element (4) has an internal thread (6) which fits the external thread (7) of the actual anchor with play, which internal thread can be screwed onto the external thread (7) of the actual anchor in order axially to fix the sealing element (4) on the actual anchor and has play on the external thread (7) of the actual anchor so that the sealing element (4) is pivotable on the actual anchor.

2. Anchor according to claim 1, **characterised in that** the internal thread (6) and/or the through-hole (5) in the sealing element (4) is axially short.

3. Anchor according to claim 1 or 2, **characterised in that** the through-hole (5) of the sealing element (4) has a mouth (8) which widens.

4. Anchor according to any one of claims 1 to 3, **characterised in that** the sealing element (4) is a perforated disc (3).

5. Anchor according to any one of claims 1 to 4, **characterised in that** the sealing element (4) has in its contact face (9) a depression (11, 14) which surrounds the through-hole (5) at a distance and/or directly.

6. Anchor according to claim 5, **characterised in that** the sealing element (4) has at least one opening (16, 17) at a distance from the through-hole (5), which opening passes from an outer side to the contact face (9).

7. Anchor according to claim 5, **characterised in that** the sealing element (4) has, in its contact face (9), a first depression (11) which surrounds the through-hole (5) directly and, in its contact face (9), a second depression (14) which surrounds the through-hole (5) at a distance, and a connection (19) between the two depressions (11, 14).

8. Anchor according to any one of the preceding claims, **characterised in that** the sealing element (4) has a tool seat (18) for the rotationally fixed attachment of a turning tool by interlocking engagement.

9. Anchor according to any one of claims 6 to 8, **characterised in that** the at least one opening (16, 17) has the tool seat (18).

10. Anchor according to claim 5, **characterised in that** the sealing element (4) has, in its contact face (9), a second depression (14) which surrounds the through-hole (5) at a distance and, on its contact face (9), a seal (13) which surrounds the second depression (14).

## Revendications

1. Ancrage avec un élément d'étanchéité (4) et avec un élément d'ancrage proprement dit, en particulier une tige filetée (2), pour l'ancrage dans un trou d'ancrage (22) ménagé dans un fond d'ancrage (20), sachant que l'élément d'ancrage proprement dit présente un filetage extérieur (7), et que l'élément d'étanchéité (4) présente une face d'application (9), destinée à s'appliquer contre une face supérieure du fond d'ancrage (20), et un trou débouchant (5) pour l'élément d'ancrage proprement dit, sachant que l'élément d'étanchéité (4) peut pivoter sur l'élément d'ancrage proprement dit lorsque l'élément d'ancrage proprement dit traverse le trou débouchant (5) dans l'élément d'étanchéité (4), **caractérisé en ce que** le trou débouchant (5) de l'élément d'étanchéité (4) présente un filetage intérieur (6), qui est assorti avec jeu au filetage extérieur (7) de l'élément d'ancrage proprement dit et qui peut être vissé sur le filetage extérieur (7) de l'élément d'ancrage proprement dit en vue d'une fixation axiale de l'élément d'étanchéité (4) sur l'élément d'ancrage proprement dit et présente alors ledit jeu sur le filetage extérieur (7) de l'élément d'ancrage proprement dit, de sorte que l'élément d'étanchéité (4) peut pivoter sur l'élément d'ancrage proprement dit.

2. Ancrage selon la revendication 1, **caractérisé en ce que** le filetage intérieur (6) et/ou le trou débouchant (5) dans l'élément d'étanchéité (4) est axialement court.

3. Ancrage selon la revendication 1 ou 2, **caractérisé en ce que** le trou débouchant (5) de l'élément d'étanchéité (4) présente une embouchure (8) allant en s'élargissant.

4. Ancrage selon l'une des revendications 1 à 3, **caractérisé en ce que** l'élément d'étanchéité (4) est un disque perforé (3).

5. Ancrage selon l'une des revendications 1 à 4, **caractérisé en ce que** l'élément d'étanchéité (4) présente dans sa face d'application (9) un renfoncement (11, 14) entourant directement et/ou à distance le trou débouchant (5).

6. Ancrage selon la revendication 5, **caractérisé en ce que** l'élément d'étanchéité (4) présente, à distance du trou débouchant (5), au moins une couverture (16, 17) le traversant d'un côté extérieur à la face d'application (9).

7. Ancrage selon la revendication 5, **caractérisé en ce que** l'élément d'étanchéité (4) présente dans sa face d'application (9) un premier renfoncement (11) entourant directement le trou débouchant (5) et un deuxième renfoncement (14) entourant à distance le trou débouchant (5), et présente une liaison (19) entre les deux renfoncements (11, 14).

8. Ancrage selon l'une des revendications précédentes, **caractérisé en ce que** l'élément d'étanchéité (4) présente un siège d'outil (18) pour l'application en solidarité de rotation, par complémentarité de forme, d'un outil de vissage.

9. Ancrage selon l'une des revendications 6 à 8, **caractérisé en ce que** l'ouverture au moins unique (16, 17) présente le siège d'outil (18).

10. Ancrage selon la revendication 5, **caractérisé en ce que** l'élément d'étanchéité (4) présente dans sa face d'application (9) un deuxième renfoncement (14) entourant à distance le trou débouchant (5), et sur sa face d'application (9) un joint d'étanchéité (13) entourant le deuxième renfoncement (14).
